(19) Europäisches Patentamt
European Patent Office
Office européen des brevets

(11) **EP 4 645 628 A1**

(12) **EUROPÄISCHE PATENTANMELDUNG**

(43) Veröffentlichungstag:
**05.11.2025  Patentblatt 2025/45**

(21) Anmeldenummer: **24173361.7**

(22) Anmeldetag: **30.04.2024**

(51) Internationale Patentklassifikation (IPC):
**H02J 3/48** (2006.01)       **H02J 3/50** (2006.01)

(52) Gemeinsame Patentklassifikation (CPC):
**H02J 3/48; H02J 3/50;** H02J 2203/10;
H02J 2203/20

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft
80333 München (DE)**

(72) Erfinder:
• **Duckheim, Mathias
  91052 Erlangen (DE)**
• **Mora Gil, Edwin Camilo
  34123 Kassel (DE)**
• **Schubert, Jano
  91301 Forchheim (DE)**

(74) Vertreter: **Siemens Patent Attorneys
Postfach 22 16 34
80506 München (DE)**

(54) **COMPUTERIMPLEMENTIERTES VERFAHREN ZUM REGELN EINES ELEKTRISCHEN ENERGIE-VERSORGUNGS-NETZES, REGELUNGS-VORRICHTUNG ZUM REGELN DES ELEKTRISCHE ENERGIE-VERSORGUNGS-NETZES SOWIE ELEKTRISCHES ENERGIE-VERSORGUNGS-NETZ MIT DER REGELUNGS-VORRICHTUNG**

(57)    Computerimplementiertes Verfahren zum Regeln eines elektrischen Energie-Versorgungs-Netzes, Regelungs-Vorrichtung zum Regeln des elektrische Energie-Versorgungs-Netzes sowie elektrisches Energie-Versorgungs-Netz mit der Regelungs-Vorrichtung

Die Erfindung betrifft ein computerimplementiertes Verfahren zum Regeln eines elektrischen Energie-Versorgungs- Netzes, das eine Vielzahl von elektrischen Netz-Komponenten aufweist. Für das Verfahren werden folgende Verfahrens-Schritte durchgeführt:
a) Festlegen einer Regelungs-Größe für das Regeln des elektrischen Energie-Versorgungs-Netzes, die eine Wirkleistungs-Regelungs-Größe für mindestens eine der elektrischen Netz-Komponenten und/oder eine Blindleistungs-Regelungs-Größe für mindestens eine der elektrischen Netz-Komponenten aufweist,
b) Schätzen eines aktuellen Ist-Werts mindestens einer elektrischen Ist-Zustands-Größe des elektrischen Energie-Versorgungs-Netzes und
c) Regeln des elektrischen Energie-Versorgungs-Netzes mit Hilfe der Regelungs-Größe und mit Hilfe des geschätzten aktuellen Ist-Werts der elektrischen Ist-Zustands-Größe des elektrischen Energie-Versorgungs-Netzes, so dass ein vorbestimmter Ziel-Wert einer elektrischen Ziel-Zustands-Größe des elektrischen Energie-Versorgungs-Netzes erreicht wird.

Zudem wird eine Regelungs-Vorrichtung (Kontroller) zum Regeln eines elektrischen Energie-Versorgungs-Netzes mit Hilfe des computerimplementierten Verfahrens angegeben. Darüber hinaus wird ein elektrisches Energie-Versorgungs-Netz angegeben, das eine Vielzahl von elektrischen Netz-Komponenten und eine entsprechende Regelungs-Vorrichtung aufweist.

## FIG 2

## Beschreibung

Die Erfindung betrifft ein computerimplementiertes Verfahren zum Regeln eines elektrischen Energie-Versorgungs-Netzes und eine Regelungs-Vorrichtung zum Regeln des elektrischen Energie-Versorgungs-Netzes. Daneben wird ein elektrisches Energie-Versorgungs-Netz mit der Regelungs-Vorrichtung vorgestellt.

Ein elektrisches Energie-Versorgungnetz (Energie-Versorgungs-Netzwerk, Strom-Netz) ist in der Regel kaskadiert aufgebaut, d.h. es weist verschiedene, elektrisch miteinander verbundene (gekoppelte) Spannungs-Ebenen auf. So besteht ein Energie-Versorgungs-Netz beispielsweise aus einem Hochspannungs-Teil-Netz mit einem Spannungs-Niveau von über 110 kV, einem Mittelspannungs-Teil-Netz mit einem Spannungs-Niveau zwischen 1 kV und 110 kV und einem Niederspannungs-Teil-Netz mit einem Spannungs-Niveau von unter 1 kV. Durch den zunehmenden Einsatz von dezentralen Erzeugern elektrischer Energie (z.B. Photovoltaik-Anlagen oder Biogas-Anlagen und von dezentralen Speichern elektrischer Energie sowie von neuen elektrischen Verbrauchern (z.B. Wärmepumpen und Elektrofahrzeuge) werden die Vorgänge in Niederspannungs-Teil-Netzen dynamischer. Es kann davon ausgegangen werden, dass zur Einhaltung von zulässigen Spannungs-Grenzen sowie von thermischen Strom-Belastungen von elektrischen Kabeln in Zukunft auch die Niederspanungs-Teil-Netze überwacht und reguliert werden müssen. Für das Überwachen bzw. für das Regulieren eines Niederspannungs-Teil-Netzes wird beispielsweise ein Zustand des Niederspannungs-Teil-Netzes zur Vorbereitung von Gegen-Maßnahmen geschätzt (State Estimation). Ein derartiges Verfahren ist beispielsweise aus der EP 3 107 174 B1 bekannt.

Aufgrund der großen Anzahl von Betriebs-Mitteln (Netz-Komponenten) ist es allerdings wirtschaftlich nicht sinnvoll, ein Niederspannungs-Teil-Netz flächendeckend mit Sensoren auszustatten, um das Niederspannungs-Teil-Netz bzw. einen Zustand des Niederspannungs-Teil-Netzes überwachen zu können.

Aufgabe der vorliegenden Erfindung ist es, ein automatisches Überwachen und automatisches Regulieren eines elektrischen Energie-Versorgungs-Netzes zu ermöglichen, wobei möglichst wenig Sensoren für das Erfassen von aktuellen elektrischen Größen zum Einsatz kommen sollen.

Zur Lösung der Aufgabe wird ein computerimplementiertes Verfahren zum Regeln eines elektrischen Energie-Versorgungs- Netzes angegeben, das eine Vielzahl von elektrischen Netz-Komponenten aufweist. Für das Verfahren werden folgende Verfahrens-Schritte durchgeführt:

a) Festlegen einer Regelungs-Größe für das Regeln des elektrischen Energie-Versorgungs-Netzes, die eine Wirkleistungs-Regelungs-Größe für mindestens eine der elektrischen Netz-Komponenten und/oder eine Blindleistungs-Regelungs-Größe für mindestens eine der elektrischen Netz-Komponenten aufweist,

b) Schätzen eines aktuellen Ist-Werts mindestens einer elektrischen Ist-Zustands-Größe des elektrischen Energie-Versorgungs-Netzes und

c) Regeln des elektrischen Energie-Versorgungs-Netzes mit Hilfe der Regelungs-Größe und mit Hilfe des geschätzten aktuellen Ist-Werts der elektrischen Ist-Zustands-Größe des elektrischen

Energie-Versorgungs-Netzes, so dass ein vorbestimmter Ziel-Wert einer elektrischen Ziel-Zustands-Größe des elektrischen Energie-Versorgungs-Netzes erreicht wird.

Eine zeitliche Reihenfolge der vorbereitenden Schritte a) und b) ist nicht beachtlich. So könnte der Schritt a) auch gleichzeitig zu Schritt b) oder nach dem Schritt b) erfolgen.

Zur Lösung der Aufgabe wird auch eine Regelungs-Vorrichtung (Kontroller) zum Regeln eines elektrischen Energie-Versorgungs-Netzes mit Hilfe des computerimplementierten Verfahrens angegeben.

Darüber hinaus wird zur Lösung der Aufgabe auch ein elektrisches Energie-Versorgungs-Netz angegeben, das eine Vielzahl von elektrischen Netz-Komponenten und eine entsprechende Regelungs-Vorrichtung aufweist.

Das elektrische Energie-Versorgungs-Netz kann ein Gesamt-Energie-Versorgungs-Netz oder ein Teil-Netz eines kaskadiert aufgebauten Gesamt-Energie-Versorgungs-Netzes sein. Beispielsweise verfügt das elektrische Gesamt-Energie-Versorgungs-Netz über hierarchisch übergeordnete und hierarchisch untergeordnete elektrische Teil-Netze mit unterschiedlichen Spannungs-Niveaus. Das hierarchisch übergeordnetes Teil-Netz ist beispielsweise ein Hochspannungs-Netz (High Voltage-, HV-Netz) mit einem übergeordneten Spannungs-Niveau von über oder gleich 110 kV oder ein Mittelspannungs-Netz (Medium Voltage-, MV-Netz) mit einem aus dem Bereich von 10 kV bis 30 kV ausgewählten, übergeordneten Spannungs-Niveau. Dem Spannungs-Niveau des hierarchisch übergeordneten Teil-Netzes entsprechend weist dann das hierarchisch untergeordnete Teil-Netz ein Mittelspannungs-Netz mit einem aus dem Bereich von 10 kV bis 30 kV ausgewählten, untergeordneten Spannungs-Niveau oder ein Niederspannungs-Netz (Low Voltage, LV-Netz) mit einem untergeordneten Spannungs-Niveau von unter 1 kV auf.

Das elektrische Energie-Versorgungs-Netz weist eine Vielzahl elektrischer Netz-Komponenten auf. Die elektrischen Netz-Komponenten können Quellen (producer) elektrischer Energie, Verbraucher (consumer) elektrischer Energie, Quellen und Verbraucher (prosumer) elektrischer Energie oder Speicher elektrischer Energie sein. Ein Verbraucher entnimmt dem elektrischen Energie-Versorgungs-Netz elektrische Energie. Der Verbraucher ist beispielsweise ein Elektrofahrzeug, das über eine Ladestation an das elektrische Energie-versorgungs-Netz angekoppelt werden kann. Im Gegensatz zu einem Verbraucher speist eine Quelle elektrischer Energie das elektrische Energie-Versorgungs-Netz mit elektrischer Energie. Die Quelle elektrischer Energie ist beispielsweise eine Quelle für erneuerbare Energie. Die Quelle für erneuerbare Energie ist beispielsweise eine Photovoltaik-Anlage und eine Bio-Gas-Anlage .

Zum Schätzen des aktuellen Zustands des elektrischen Energie-Versorgungs-Netzes werden aktuelle Werte von elektrischen Zustands-Größen des elektrischen Energie-Versorgungs-Netzes geschätzt. Eine elektrische Zustands-Größe des elektrischen Energie-Versorgungs-Netzes ist beispielsweise eine Knoten-Spannung oder ein Zweig-Strom im elektrischen Energie-Versorgungs-Netz.

Die grundlegende Idee der Erfindung ist es, zum Regeln des elektrischen Energie-Versorgungs-Netzes eine spezielle Regelungs-Größe mit einer Wirkleistungs-Regelungs-Größe und mit einer Blindleistungs-Regelungs-Größe zu verwenden, den Zustand des Energie-Versorgungs-Netzes zu schätzen und auf der Grundlage der festgelegten Regelungs-Größe und des geschätzten Zustands des Energie-Versorgungs-Netzes das elektrische Energie-Versorgungs-Netz derart zu regeln, dass vorbestimmte Grenzen der Werte von Zustands-Größen (elektrische Parameter) des elektrischen Energie-Versorgungs-Netzes eingehalten werden.

In einer besonderen Ausgestaltung wird als Wirkleistungs-Regelungs-Größe ein Wirkleistungs-Soll-Wert der elektrischen Netz-Komponente und/oder ein aus dem Bereich von 0 bis 1 ausgewählter Wirkleistungs-Kappungs-Faktor $u_{K,t}^{\mathrm{p}}$ für die elektrische Netz-Komponente verwendet. Der Wirkleistungs-Kappungs-Faktor gibt an, welcher Anteil der aktuellen Leistung der Netz-Komponente geregelt werden soll.

In einer weiteren Ausgestaltung wird als Blindleistungs-Regelungs-Größe ein Blindleistungs-Soll-Wert für die elektrische Netz-Komponente und/oder ein aus dem Bereich von -1 bis 1 ausgewählter Blindleistungs-Faktor $u_{K,t}^{\mathrm{q}}$ für die elektrischen Netz-Komponente verwendet. Der Blindleistungs-Faktor spiegelt den positiven oder negativen Beitrag der Blindleistung zur Scheinleistung einer elektrischen Netz-Komponente wider.

Die Regelungs-Größe setzt sich beispielswese aus den Wirk-Leistungs-Kappungs-Faktoren aller Netz-Komponenten des Energie-Versorgungs-Netzes und aus den Blindleistungs-Faktoren aller Netz-Komponenten des Energie-Versorgungs-Netzes zusammen.

Für ein Durchführen des Verfahrens kann auf beliebige Daten zurückgegriffen werden. In einer besonderen Ausgestaltung werden für ein Bestimmen des Wirkleistungs-Kappungs-Faktors, für ein Bestimmen des Blindleistungs-Faktors und/oder für das Schätzen des aktuellen Werts der elektrischen Zustands-Größe mindestens ein historischer Wert einer elektrischen Mess-Größe des elektrischen Energie-Versorgungs-Netzes und/oder ein aktueller Wert der elektrischen Mess-Größe des elektrischen Energie-Versorgungs-Netzes verwendet. Dabei wird vorteilhaft auf eine bereits bestehende Automatisierungs-Struktur zurückgegriffen.

In einer besonderen Ausgestaltung wird für das Festlegen der Regelungs-Größe, für das Schätzen des aktuellen Ist-Werts der elektrischen Ist-Zustands-Größe und/oder für das Regeln des elektrischen Energie-Versorgungs-Netzes ein Optimierungs-Verfahren verwendet. Insbesondere wird dabei mit dem Optimierungs-Verfahren ein datengetriebener Ansatz mit einem Maschinen-Lern-Modell eingesetzt.

Es wird ein Maschinen-Lern-Modell verwendet, das auf einer künstlichen Intelligenz (KI, artificial intelligence) basiert. Für das KI-basierte Maschinen-Lern-Modell wird ein künstliches neuronales Netz verwendet. Ein künstliches neuronales Netz weist eine informations-technische Struktur auf, die einen funktionalen Zusammenhang zwischen einem Eingangs-Signal und einem Ausgangs-Signal "erlernen" kann. Ein künstliches neuronales Netz besteht dabei aus mehreren künstlichen Neuronen, die untereinander verbunden sind.

In einer besonderen Ausgestaltung wird mit dem Maschinen-Lern-Modell zumindest ein aus der Gruppe Trainieren des Festlegens der Regelungs-Größe, Trainieren des Schätzens des Ist-Werts der elektrischen Zustands-Größe und Trainieren des Regelns des elektrischen Energie-Versorgungs-Netzes ausgewähltes Trainings-Verfahren durchgeführt. Insbesondere für das Schätzen des Ist-Werts der elektrischen Energie-Versorgungs-Netzes, also für das Schätzen des Zustands des elektrischen Energie-Versorgungs-Netzes wird das Trainieren mittels Maschinen-Lern-Modell durchgeführt.

Für das Trainings-Verfahren kann ein beliebiger Regressor mit verschiedensten Funktionen verwendet werden. So könnte ein Regressor mit nicht-linearer Funktion eingesetzt werden. Vorzugsweise wird für das Trainings-Verfahren eine Regressions-Analyse mit einem zumindest stückweise linearen Regressor angewendet. Der Regressor könnte auch komplett linear sein (also nicht nur stückweise).

Vorzugsweise wird zum Schätzen des Ist-Werts der elektrischen Zustands-Größe ein Ist-Wert-Schätzer eingesetzt, der als mehrlagiges Perzeptron modelliert wird. Der lineare Regressor wird als mehrlagiges Perzeptron (Mutilayer perceptron, MLP) modelliert. Im Weiteren ist es vorteilhaft, wenn für das Trainings-Verfahren eine Methode mit Fehler-Rückführung angewendet wird. Der lineare Regressor wird mittels Fehler-Rückführung (Backpropagation, Backpropagation of Errors) trainiert. Vorzugsweise wird für die Fehler-Rückführung eine mittlere quadratische Abweichung zwischen einem aktuellen Wert der elektrischen Zustand-Größe und einem geschätzten Wert der elektrischen Zustand-Größe als Verlustfunktion verwendet.

Das Trainings-Verfahren wird während und/oder außerhalb eines Betriebs des elektrischen Energie-Versorgungs-Netzes durchgeführt. Das Trainieren kann im Rahmen des Betriebs des elektrischen Energie-Versorgungs-Netzes, d.h. online, oder unabhängig vom Betrieb des elektrischen Energie-Versorgungs-Netzes, d.h. offline stattfinden. Das Trainieren kann mit einer zentralen Rechen-Einheit durchgeführt werden. Denkbar ist auch, dass das Trainieren mit einer separaten Rechen-Einheit durchgeführt wird und ein Ergebnis des Trainierens dann an eine zentrale Rechen-Einheit übermittelt wird.

Zusammenfassend sind folgende Vorteile der Erfindung hervorzuheben:

- Das vorgeschlagene Verfahren erlaubt ein automatisches Regeln eines Energie-Versorgungs-Netzes. Dabei ist sichergestellt, dass Grenzen der Werte von Zustands-Größen eingehalten werden.

- Das automatische Regeln gelingt auch bei begrenzter Kenntnis der Netz-Topologie oder von Netz-Parametern des elektrischen Energie-Versorgungs-Netzes.

- Mit der Erfindung gelingt es, ein elektrisches Energie-Versorgungs-Netz so zu betreiben, dass Spannungsband-Verletzungen und Eingriffe eines Betreibers des elektrischen Energie-Versorgungs-Netzes minimiert werden.

- Mit dem Verfahren wird auf vorhandene Mess-Informationen und Daten-Modelle bzw. auf eine vorhandene Automatisierungs-Struktur für das Regeln eines elektrischen Energie-Versorgungs-Netzes zurückgegriffen.

- Durch den Einsatz von künstlicher Intelligenz für das Schätzen des Zustands des elektrischen Energie-Versorgungs-Netzes kann sehr schnell auf Änderungen im elektrischen Energie-Versorgungs-Netz (z.B. Änderungen bezüglich der Netz-Topologie und/oder Änderungen bezüglich Netz-Parameter des elektrischen Energie-Versorgungs-Netzes) reagiert werden.

Im Folgenden wird die Erfindung anhand mehrerer Ausführungsbeispiele und der dazugehörigen Figuren näher beschrieben. Die Figuren sind schematisch und stellen keine maßstabsgetreue Abbildung dar.

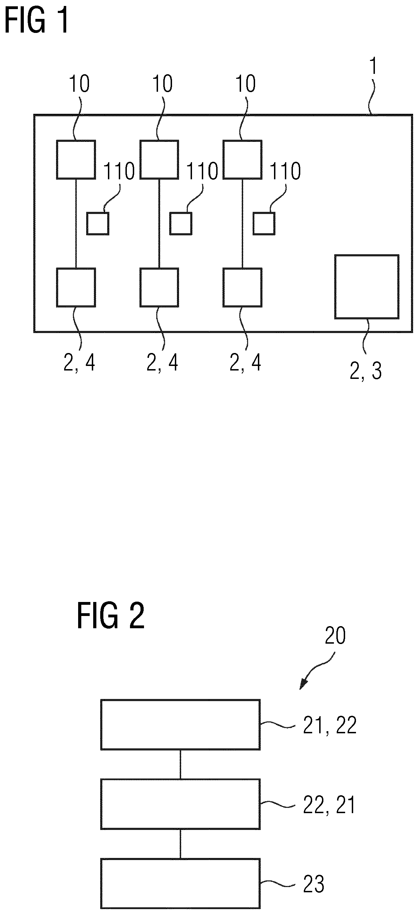

Figur 1 zeigt ein elektrisches Energie-Versorgungs-Netz.

Figur 2 zeigt ein computerimplementiertes Verfahren zum Regulieren des elektrischen Energie-Versorgungs-Netzes.

Gegeben ist ein Energie-Versorgungs-Netz 1bzw. ein Teil-Netz eines Energie-Versorguns-Netzes in Form eines Niederspannungs-Netzes mit einem Spannungs-Niveau von < 110 kV. Das Niederspannungsnetz 1 weist eine Vielzahl von elektrischen Netz-Komponenten 10 auf. Die elektrischen Netz-Komponenten 10 sind Quellen elektrischer Energie und Verbraucher elektrischer Energie. Die Quellen elektrischer Energie sind Photovoltaik-Anlagen. Die Verbraucher elektrischer Energie sind Ladestationen für elektrische Fahrzeuge.

Zudem sind Sensor-Elemente 110 zum Erfassen der Werte elektrischer Zustand-Größen vorhanden. Die Sensor-Elemente 110 sind Smart-Meter (oder andere Sensor-Elemente) zum Erfassen von Strömen oder zum Erfassen von elektrischen Spannungen und/oder zum Erfassen von elektrischen Leistungen.

Zum Regeln des elektrischen Energie-Versorgungs-Netzes 1 wird ein computerimplementiertes Verfahren eingesetzt. Gemäß dem Verfahren wird wie folgt vorgegangen:

a) Festlegen 21 einer Regelungs-Größe für das Regeln des elektrischen Energie-Versorgungs-Netzes 1, die eine Wirkleistungs-Regelungs-Größe für mindestens eine der elektrischen Netz-Komponenten 1) und/oder eine Blindleistungs-Regelungs-Größe für mindestens eine der elektrischen Netz-Komponenten 10 aufweist. Für die Wirkleistung-Regelungs-Größe wird ein Wirkleistungs-Kappungs-Faktor $u_{K,t}^{\mathrm{p}}$ für mindestens eine der elektrischen Netz-Komponenten (K) 10 verwendet wird, der zwischen 0 und 1 liegt. Für die Blindleistungs-Regelungs-Größe wird ein Blindleistungs-Faktor $u_{K,t}^{\mathrm{q}}$ für mindestens eine der elektrischen Netz-Komponenten (K) 10 verwendet, der zwischen -1 und 1 liegt,

b) Schätzen 22 eines aktuellen Werts mindestens einer elektrischen Zustands-Größe des elektrischen Energie-Versorgungs-Netzes 1 und

c) Regeln 23 des elektrischen Energie-Versorgungs-Netzes 1 mit Hilfe der Regelungs-Größe und mit Hilfe des geschätzten aktuellen Werts der elektrischen Zustands-Größe des elektrischen Energieversorgungs-Netzes 1, so dass ein vorbestimmter Ziel-Wert einer elektrischen Ziel-Zustands-Größe des elektrischen Energie-Versorgungs-Netzes erreicht wird.

Die Wirk-Leistungs-Regelungs-Größe und die Blindleistungs-Regelungsgröße beziehen sich auf dieselbe Netz-Komponente oder auf unterschiedliche Netz-Komponenten.

In alternativen Ausführungsformen werden als Wirk-Leistungs-Regelungs-Größe ein Wirk-Leistungs-Soll-Wert für die elektrische Netz-Komponente und/oder ein Blindleistungs-Soll-Wert für die elektrische Netz-Komponente verwendet.

Zum Regeln des elektrischen Energie-Versorgungs-Netzes 1 ist eine zentrale Regelung-Einrichtung 3 vorgesehen. Alternativ dazu werden dezentrale Regelungs-Einrichtungen 4 eingesetzt.

In einer alternativen Ausführung finden die Schritte 21 und 22 in umgekehrter Reihenfolge statt. Für das Festlegen 21 der Regelungs-Größe und für das Schätzen 22 des aktuellen Werts der elektrischen Zustands-Größe wird eine künstliche Intelligenz mit einem Maschinen-Lern-Verfahren eingesetzt.

Mit dem Ausführungsbeispiel sind folgende Details verbunden:
Ein Betreiber des elektrischen Energie-Versorgungs-Netzes hat nur begrenzte Informationen zu Netztopologie und zu Netzparametern des Nieder-Spannungs-Netzes. Für das Regulieren des elektrischen Energie-Versorgungs-Netzes 1 wird eine Regelungs-Vorrichtung 2 verwendet, die auf einer bestehenden Automatisierungs-Infrastruktur basiert. Die bestehende Automatisierungs-Infrastruktur weist u.a. eine Vielzahl von Sensor-Elementen 110 für das Erfassen der Werte elektrischer Zustandsgrößen auf. Die elektrischen Zustands-Größen sind elektrische Spannungen an Konten und elektrische Ströme im Niederspannung-Netz.

Darüber hinaus kann der Betreiber des elektrischen Energie-Versorgungs-Netzes nur auf eine kleine Anzahl von Echtzeit-Messungen zurückgreifen. Mit den Echt-Zeit-Messungen werden die aktuellen Werte von elektrischen Zustands-Größen erfasst. Z.B. kann so an einem Umspannwerk des elektrischen Energie-Versorgungs-Netzes zugegriffen werden und auf die sekundärseitige Spannung oder die Scheinleistung am Anfang jedes Stranges erfasst werden. Die Echtzeit-Messungen zum Zeitpunkt t werden im Vektor $z_t \in \mathbb{R}^{1+F}$ zusammengefasst. Die Zeit-Auflösung der Echtzeit-Messungen beträgt 1 min. Alternativ ist eine höhere Zeitauflösung vorgesehen.

Der Betreiber des elektrischen Energie-Versorgungs-Netzes kann zudem auf historische Messdaten der Spannungs-Beträge (Werte der elektrischen Zustandsgröße "Spannung") an solchen Knoten des elektrischen Energie-Versorgungs-Netzes zugreifen, wo Smart-Meter (SM, Sensor-Elemente 110 installiert sind. Die Smart-Meter-Messungen am Zeitpunkt t werden im Vektor $e_t \in \mathbb{R}^{N_{SM}}$ zusammengefasst. Dabei stellt $N_{\mathrm{SM}}$ die Anzahl von Smart-Metern im elektrischen Versorgungs-Netz dar. Eine Zeit-Auflösung der SM-Messungen beträgt 15 min.

Für das Verfahren wird auf eine existierende Automatisierungs-Infrastruktur zurückgegriffen. Es wird zudem angenommen, dass der Versorgungs-Netz-Betreiber sowohl Blindleistungsfaktoren für jede der Photovoltaik-Einheiten als auch Wirkleistungs-Kappungs-Faktoren für alle oder einen Teil der elektrischen Netz-Komponenten (Photovoltaik-Anlagen, Ladestationen für Elektroautos und Wärmepumpen) steuern kann.

Zur Incentivierung der Gerechtigkeit bei Regel-Eingriffen wird eine nicht diskriminierende (alternativ: diskriminierende) Regelungs-Strategie verfolgt. Dazu wird der Wirkleistungs-Kappungs-Faktor $u_{K,t}^{\mathrm{p}} \in [0,1]$ für alle einsetzbaren Netz-Komponenten (Quellen elektrischer Energie und Verbraucher elektrischer Energie) definiert. Ebenfalls wird der Blindleistungs-Faktor $u_{PV,t}^{\mathrm{q}} \in [-1,1]$ für alle einsetzbaren Photovoltaik-Anlagen definiert.

Das Verfahren beruht auf einem zweistufigen Regler, der auf Basis von den Echtzeitmessungen $z_t$ geeignete Wirkleistungskappungs- und Blindleistungs-Faktoren berechnet. Im Folgen werden diese Faktoren im Vektor

$$u_t = \begin{bmatrix} u_{PV,t}^{\mathrm{p}} & u_{EV,t}^{\mathrm{p}} & u_{WP,t}^{\mathrm{p}} & u_{PV,t}^{\mathrm{q}} \end{bmatrix}^{\mathrm{T}}$$ zusammengefasst.

Mit der ersten Stufe wird eine Zustands-Schätzung durchgeführt. Dazu wird mit Hilfe historischen Echtzeit-Messungen $z_t$ und historischer SM-Messungen $e_t$ ein linearer Regressor trainiert, um den Zusammenhang $e_t = f(z_t)$ zu approximieren. Der Regressor wird als Multilayer-Perceptron (MLP) modelliert und mittels Backpropagation trainiert. Für die Fehler-Rückführung wird eine mittlere quadratische Abweichung zwischen dem aktuellen Wert der elektrischen Zustand-Größe und dem geschätzten Wert der elektrischen Zustand-Größe als Verlustfunktion verwendet. D.h. es wird der Root-Mean-Square-Error (zwischen $e_t$ und die Schätzung $\hat{e}_t$) als Verlust-Funktion verwendet. Das Training findet offline in einer separaten Rechen-Einheit statt. Der trainierte MLP wird anschließend auf eine zentrale Rechen-Einheit übertragen und für eine Betriebs-Phase des elektrischen Energie-Versorgungs-Netzes installiert.

Mit der zweiten Stufe findet dann das eigentliche Regeln statt.

Die Echtzeit-Schätzung $\hat{y}_t = \left[v_t^{\mathrm{U}} \; \hat{e}_t^{\mathrm{T}}\right]^{\mathrm{T}} \in \mathbb{R}^{1+N_{\mathrm{SM}}}$, die aus der verfügbaren Umspannwerk-Spannungs-messung $v_t^{\mathrm{U}}$ und der Spannungs-Schätzung $\hat{e}_t$ an den Knoten mit installierten SM besteht, wird in der zweiten Stufe zur Berechnung der Regel-Größe $u_t$ eingesetzt. Da der Regler Spannungsband-Verletzungen mit minimalen Regel-Eingriffe vermeiden soll, wird ein nicht-konvexes, nicht-lineares Optimierungsproblem gelöst:

$$u_t = \arg \min_u u^{\mathrm{T}} M u \quad \text{s.t.} \quad v^{min} \leq h(u, w) \leq v^{max}, \; u^{min} \leq u \leq u^{max}.$$

Dabei ist $y = h(u)$ der unbekannte Zusammenhang zwischen Regel-Eingriffen und Umspannwerk- und SM-Spannungs-Beträgen, $v^{min} \in \mathbb{R}^{1+N_{\mathrm{SM}}}$ der Vektor von minimalen zulässigen Spannungen, $v^{max} \in \mathbb{R}^{1+N_{\mathrm{SM}}}$ der Vektor von maximalen zulässigen Spannungen, $u^{min} = [0\,0\,0\,\text{-}\,1]^{\mathrm{T}}$, $u^{max} = [1\,1\,1\,1]^{\mathrm{T}}$ und $M$ eine invertierbare Matrix, die den Einsatz von Wirkleistungs-Kappungs- und Blindleistungs-Faktoren gewichtet.

Da der Zusammenhang $y = h(u)$ nicht bekannt ist (denn der Netz-Betreiber hat nur begrenze Informationen über Netz-Topologie und elektrische Netz-Parameter), wird das obige Optimierungs-Problem mit Hilfe der Echtzeit-Schätzung $\hat{y}_t$ iterativ gelöst. Dazu wird Projected-Gradient-Descent auf die Lagrange-Dual-Funktion des Optimierungs-Problems angewendet: Zuerst werden projektierten Lagrange-Multiplikatoren wie folgt berechnet:

$$\lambda_{t+1}^{\min} = \left[\lambda_t^{\min} + \alpha\left(v^{min} - \hat{y}_t\right)\right]_{\geq 0},$$

$$\lambda_{t+1}^{\max} = \left[\lambda_t^{\max} + \alpha\left(\hat{y}_t - v^{max}\right)\right]_{\geq 0}$$

mit Lagrange-Multiplikatoren $\lambda_t^{\min} \in \mathbb{R}^{1+N_{\mathrm{SM}}}$ und $\lambda_t^{\max} \in \mathbb{R}^{1+N_{\mathrm{SM}}}$, und bekanntem Skalar-Parameter $\alpha > 0$.

Die projektierten Lagrange-Multiplikatoren werden anschließend zu einer unbeschränkten Prädiktion des Wertes der Regel-Größen genutzt, die sich unter Einsatz der (als bekannt angenommenen) Sensitivitäts-Matrix $X$ wie folgt berechnen lässt:

$$\tilde{u} = M^{-1} X (\lambda_{t+1}^{\min} - \lambda_{t+1}^{\max}).$$

Zuletzt ist die obige unbeschränkte Prädiktion auf die Menge von zulässigen Stellgrößen zu projizieren:

$$u_{t+1} = \arg \min_{u^{min} \leq u' \leq u^{max}} (u' - \tilde{u})^{\mathrm{T}} M (u' - \tilde{u}).$$

Mit dem oben beschrieben Verfahren werden Grenzwert-Verletzungen (nach Konvergenz des Reglers) verhindert unter minimaler Verwendung von Steuer-Freiheitsgraden ohne ein genaues Modell des elektrischen Versorgungs-Netzes zu verwenden und keine oder sehr wenige Echtzeitmessungen für elektrische Größen zu verwenden, für die Grenzwerte eingehalten werden sollen.

**Patentansprüche**

1. Computerimplementiertes Verfahren (20) zum Regeln eines elektrischen Energie-Versorgungs- Netzes (1), das eine Vielzahl von elektrischen Netz-Komponenten (10) aufweist, mit folgenden Verfahrens-Schritten:

   a) Festlegen (21) einer Regelungs-Größe für das Regeln des elektrischen Energie-Versorgungs-Netzes (1), die eine Wirkleistungs-Regelungs-Größe für mindestens eine der elektrischen Netz-Komponenten (10) und/oder eine Blindleistungs-Regelungs-Größe für mindestens eine der elektrischen Netz-Komponenten (10) aufweist,
   b) Schätzen (22) eines aktuellen Ist-Werts mindestens einer elektrischen Ist-Zustands-Größe des elektrischen Energie-Versorgungs-Netzes (1) und

c) Regeln (23) des elektrischen Energie-Versorgungs-Netzes (1) mit Hilfe der Regelungs-Größe und mit Hilfe des geschätzten aktuellen Ist-Werts der elektrischen Ist-Zustands-Größe des elektrischen Energie-Versorgungs-Netzes (1), so dass ein vorbestimmter Ziel-Wert einer elektrischen Ziel-Zustands-Größe des elektrischen Energie-Versorgungs-Netzes erreicht wird.

2. Verfahren nach Anspruch 1, wobei als Wirkleistungs-Regelungs-Größe ein Wirk-Leistungs-Soll-Wert für die elektrische Netz-Komponente (10) und/oder ein aus dem Bereich von 0 bis 1 ausgewählter Wirkleistungs-Kappungs-Faktor $u_{K,t}^{\mathrm{p}}$ für die elektrische Netz-Komponente (10) verwendet werden.

3. Verfahren nach Anspruch 1 oder 2, wobei als Blindleistungs-Regelungs-Größe ein Blindleistungs-Soll-Wert für die elektrische Netz-Komponente (10) und/oder ein aus dem Bereich von -1 bis 1 ausgewählter Blindleistungs-Faktor $u_{K,t}^{\mathrm{q}}$ für die elektrischen Netz-Komponente (10) verwendet werden.

4. Verfahren nach einem der Ansprüche 1 bis 3, wobei für das Festlegen der Regelungs-Größe, für das Schätzen des aktuellen Ist-Werts der elektrischen Ist-Zustands-Größe und/oder für das Regeln des elektrischen Energie-Versorgungs-Netzes (1) ein Optimierungs-Verfahren verwendet wird.

5. Verfahren nach Anspruch 4, wobei mit dem Optimierungs-Verfahren ein datengetriebener Ansatz mit einem Maschinen-Lern-Modell eingesetzt wird.

6. Verfahren nach Anspruch 5, wobei mit dem Maschinen-Lern-Modell zumindest ein aus der Gruppe Trainieren des Festlegens der Regelungs-Größe, Trainieren des Schätzens des Ist-Werts der elektrischen Zustands-Größe und Trainieren des Regelns des elektrischen Energie-Versorgungs-Netzes ausgewähltes Trainings-Verfahren durchgeführt wird.

7. Verfahren nach Anspruch 6, wobei für das Trainings-Verfahren eine Regressions-Analyse mit einem zumindest stückweise linearen Regressor angewendet wird.

8. Verfahren nach einem der Ansprüche 1 bis 7, wobei zum Schätzen des Ist-Werts der elektrischen Zustands-Größe ein Ist-Wert-Schätzer eingesetzt wird, der als mehrlagiges Perzeptron modelliert wird.

9. Verfahren nach einem der Ansprüche 6 bis 8, wobei für das Trainings-Verfahren eine Methode mit Fehler-Rückführung angewendet wird.

10. Verfahren nach Anspruch 9, wobei für die Fehler-Rückführung eine mittlere quadratische Abweichung zwischen einem aktuellen Wert der elektrischen Zustand-Größe und einem geschätzten Wert der elektrischen Zustand-Größe als Verlustfunktion verwendet wird.

11. Verfahren nach einem der Ansprüche 6 bis 10, wobei das Trainings-Verfahren während und/oder außerhalb eines Betriebs des elektrischen Energie-Versorgungs-Netzes (1) durchgeführt wird.

12. Regelungs-Vorrichtung (2) zum Regeln eines elektrischen Energie-Versorgungs-Netzes mit Hilfe eines computerimplementierten Verfahrens nach einem der Ansprüche 1 bis 11.

13. Elektrisches Energie-Versorgungs-Netz (1), das

- eine Vielzahl von elektrischen Netz-Komponenten (11) und
- eine Regelungs-Vorrichtung (2) nach Anspruch 12 aufweist.

FIG 1

10    10    10                        1

110    110    110

2, 4    2, 4    2, 4              2, 3

FIG 2

20

21, 22

22, 21

23

Europäisches Patentamt

European Patent Office

Office européen des brevets

**EUROPÄISCHER RECHERCHENBERICHT**

Nummer der Anmeldung

EP 24 17 3361

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 340 413 A1 (SIEMENS AG [DE]) 27. Juni 2018 (2018-06-27) * Absatz [0007] - Absatz [0091] * ----- | 1-13 | INV. H02J3/48 H02J3/50 |
| X | US 2019/288508 A1 (FROEHNER WIEBKE [DE] ET AL) 19. September 2019 (2019-09-19) * Absatz [0007] - Absatz [0067] * ----- | 1-13 | |
| X | AU 2022 201 712 A1 (UTILIDATA INC [US]) 29. September 2022 (2022-09-29) * Absatz [0003] - Absatz [0174] * ----- | 1-13 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 11. Oktober 2024 | Jonda, Sven |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2024

| Im Recherchenbericht angeführtes Patentdokument | Datum der Veröffentlichung | Mitglied(er) der Patentfamilie | Datum der Veröffentlichung |
|---|---|---|---|
| EP 3340413 A1 | 27-06-2018 | KEINE | |
| US 2019288508 A1 | 19-09-2019 | CA 3035523 A1 | 16-09-2019 |
| | | EP 3540911 A1 | 18-09-2019 |
| | | ES 2824841 T3 | 13-05-2021 |
| | | US 2019288508 A1 | 19-09-2019 |
| AU 2022201712 A1 | 29-09-2022 | AU 2022201712 A1 | 29-09-2022 |
| | | EP 4057467 A1 | 14-09-2022 |
| | | JP 2022140414 A | 26-09-2022 |
| | | US 2022294217 A1 | 15-09-2022 |
| | | US 2023187934 A1 | 15-06-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3107174 B1